# EUROPEAN PATENT SPECIFICATION

(11) **EP 2 165 951 B1**
(45) Date of publication and mention of the grant of the patent: **31.08.2011**
(21) Application number: 09178977.6
(22) Date of filing: 22.12.2005
(51) Int. Cl.: B65G 53/66, B65G 53/08, B65G 67/60, E21B 21/06

(54) **Method for conveying drill cuttings**
Verfahren zum Fördern von Bohrklein
Procédé pour le transport de déblais de forage

(30) Priority: 29.09.2005 US 239650
(43) Date of publication of application: 24.03.2010
(62) Divisional of application: 05821774.6
(73) Proprietor: National Oilwell Varco, L.P., Houston, TX 77036 (US)
(72) Inventor: Burnett, George, Alexander, Aberdeen,, Aberdeenshire AB10 7JR (GB); Crabb, Colin, Arbroath,, DD11 2LZ (GB); Wood, David, Subiaco,, Western Australia 6106 (AU); Seyffert, Kenneth, Wayne, Houston,, TX 77018 (US); McIntosh, James, The Woodlands,, TX 77385 (US)
(74) Representative: Cole, Paul Gilbert

(56) References cited:
- WO-A-03/021074
- GB-A- 2 392 895
- US-A1- 2005 183 574

## Description

The present invention relates to a method for using a gas according to the preamble of claim 1.

In the drilling of a borehole in the construction of an oil or gas well, a drill bit is arranged on the end of a drill string, which is rotated to bore the borehole through a formation. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The density of the drilling mud is closely controlled to inhibit the borehole from collapse and to ensure that drilling is carried out optimally. The density of the drilling mud effects the rate of penetration of the drill bit. By adjusting the density of the drilling mud, the rate of penetration changes at the possible detriment of collapsing the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as those shale shakers disclosed in US 5,265,730, WO 96/33792 and WO 98/16328. Further processing equipment such as centrifuges and hydrocyclones may be used to further clean the mud of solids. The solids are covered in contaminates and residues.

The resultant solids, known herein as "drill cuttings" are processed to remove substantially all of the residues and contaminates from the solids. The solids can then be disposed of in a landfill site or by dumping at sea in the environment from which the solids came. Alternatively, the solids may be used as a material in the construction industry or have other industrial uses. The solids are usually processed on land using methods disclosed, for example in our co-pending PCT Application, Publication No. WO 03/062591. This processing equipment may be arranged near to an oil or gas rig. Alternatively, the processing equipment may be situated on land away from a marine based oil platform or distant from a land based rig. Therefore, the solids have to be conveyed from the exit point of the shakers, centrifuges and hydrocyclones to the solids processing equipment. In certain prior art systems oily drill cuttings are loaded into vessels, skips or cuttings boxes which are lifted by a crane onto a supply boat. Alternatively, this may, in part be carried out by using a ditch provided with a driven screw to convey the wet solids to storage vessels. Such a system is disclosed in our co-pending PCT Application, Publication No. WO 03/021074. Drill cuttings having been processed by a shale shaker can contain approximately 10% to 20% moisture (oil, water) by weight, although this can vary significantly.

It is now often desirable and/or legislatively required to transport recovered drill cuttings to a processing site on shore to remove substantially all of the oil and contaminates therein so that the drill cuttings can be disposed of or used in an environmentally safe and friendly way. Environmental agencies around the world are moving towards a "zero discharge" policy from offshore rigs. Continuous drilling on an offshore oil rig is common and drill cuttings are stored on the rigs until they can be transported by ships known as supply boats which collect the oily drill cuttings and take them to another site for further processing. There is a need to efficiently and effectively store the oily drill cuttings on the rig and also a need to efficiently and effectively store the cuttings on supply boats. The solids may have a fluid, such as water, added to them to form a slurry. The slurry may be pumped into ships, lorries, skips or bags to be moved to the processing site. Alternatively or additionally, the wet solids from the storage vessels may be moved using a compressed gas, as disclosed in PCT Publication No. WO 00/76889 through pipes.

The prior art discloses various methods for transporting low slurry density and low particle density dry solids and non-continuous high slurry density transport of high particle density wet material using continuous positive pneumatic pressure. Many low density slurries typically have particles mixed with air with a specific gravity less than 1.0. The prior art discloses various methods that employ the vacuum transport of high particle and low particle density solids.

Thus tackling the problem of transporting, buffering and storing low slurry density, high particle density material, and particularly, but not exclusively, oilfield drill cuttings or other oily/wet waste material using continuous positive pneumatic pressure.

WO 00/76889 discloses a system for transporting drill cuttings in the form of a non-free flowing paste, the system comprising a pressure vessel having a conical hopper discharge portion having a cone angle sufficient to induce mass flow. The drill cuttings are stored on a rig and supply boat in ISO sized storage vessels which have a conical hopper discharge portion, such that the ISO sized container vessels can be discharged between each other on the rig and ship and between the ship and port. These ISO containers are very tall and the quantity of drill cuttings stored in them is limited due to the lower converging portion of the vessels.

German Patent No. DE 40 10 676 discloses an apparatus for conveying sewage sludge or concrete. The apparatus comprises a pressure vessel having a feed opening and a screw conveyor therebelow. Paddles act as a stirrer and forcibly fill the screw conveyor through an opening in the pressure vessel. The sewage sludge or concrete is moved by the screw conveyor into a nozzle into which compressed air is applied to move the sewage sludge or concrete along a pipe in a continuous stream

United Kingdom Patent No. GB-A-2,330,600 discloses a system for transporting oil drill cuttings from a rig to shore. The system comprises the steps of mixing the oily drill cuttings with a mud to form a slurry, storing the slurry in retention tanks on the rig and subsequently pumping the slurry to retention tanks on a ship for transportation to shore.

WO 03/021074 discloses inter *alia* an apparatus for transporting solid waste materials, the apparatus comprising: an upstream waste supply means; feed means to transport waste from the waste supply means to a pneumatic conveying means; which pneumatic conveying means comprises a tube within which waste material is transferred from the feed means to a downstream waste collector; wherein said tube is associated with at least one blockage sensing device, and electronic data processing means to process data output from the blockage sensing device.

WO 82/03066 discloses a method for unblocking conveying pipes for particulate material, comprising feeding air to the pipe at spaced-apart positions therealong in order to reduce the length of the blocking material.

US 2005/183574 discloses a method of conveying drill cuttings using a gas under positive pressure along a pipe, the method comprising the step of assessing if the drill cuttings to be conveyed are wet or dry, according to the preamble of claim 1.

In accordance with the present invention, there is provided a method of conveying drill cuttings using a gas to convey the drill cuttings along a pipe, the method comprising the steps of assessing if the drill cuttings to be conveyed are dry or wet characterised in that the method further comprises the step of activating a valve to divert the gas through an appropriate size orifice to provide the gas at an appropriate pressure and velocity.

Preferably, a sensor carries out the step of assessing if the drill cuttings to be conveyed are wet or dry. Advantageously, the sensor measures the moisture content. Preferably, the moisture reading is compared with a defined moisture content loaded into a controller. Advantageously, the controller activates the valve in response to the reading obtained by the sensor. Preferably, the drill cuttings are loaded into a hopper above a vessel for loading the pipe, wherein the sensor is arranged to measure the moisture content of the drill cuttings in the hopper.

This application is divided from European Patent Publication Number 1 928 769, which relates to an apparatus for conveying material, the apparatus comprising a vessel for receiving material to be conveyed, a metering screw and a discharge line, the metering screw for moving the material from the vessel into the discharge line, and at least one gas inlet for providing positive pressure to facilitate movement of the material through the discharge line characterised in that the apparatus further comprises a pressure sensor for sensing pressure in the discharge line, and control apparatus for automatically controlling the metering screw in response to a pressure sensed by the pressure sensor apparatus. Preferably, the gas inlet is provided with a valve to selectively allow gas into the discharge line.

Preferably, the gas inlet is arranged in the discharge line. Advantageously, the gas inlet comprises an annular gap about the discharge pipe. Preferably, the gas inlet is arranged in a collar surrounding a pipe stub or cowl covering the metering screw through which the material is conveyed, an annular gap formed between the pipe collar and the pipe stub, the annular gap for facilitating entry of the gas into the discharge line. Advantageously, the apparatus further comprises a reducer in the discharge line having a first diameter at a first end and a second diameter at a second end, the diameter of the first reducer gradually decreasing from the first end to the second end, the first end closer to the vessel than the second end. Preferably, the diameter at the first end is substantially equal to the diameter of a cowling surrounding the metering screw and the diameter at the second end, equal to the size of a valve.

Preferably, the apparatus further comprises a further gas inlet in the vessel for allowing gas into the vessel to inhibit material from being blown from the discharge line across the metering screw and into the vessel. Preferably, the further gas inlet is provided with a valve for selectively allowing gas into the vessel. The balancing pressure is preferably equal to the pressure in the box, but the balancing pressure may be slightly less than or greater than the pressure in the box.

Advantageously, the apparatus further comprises an outlet valve for selectively opening and closing the discharge line. Preferably, the gas inlet is arranged between the metering screw and the outlet valve. Alternatively or additionally, a further gas inlet is arranged downstream of the outlet valve. Preferably, the further gas inlet is provided with a valve for selectively allowing gas to pass into the discharge line. Preferably, the gas inlet comprises at least two orifices and at least one valve for selecting between each of the at least two orifices. Advantageously, the at least two orifices are of different sizes. Preferably, the orifices may be in the form of a pipe or located in flow-lines, the flow opening area of the first line or orifice therein sized for facilitating the flow of wet material through the discharge line, and the flow opening area of the second line or orifice therein is sized for facilitating the flow of dry material through the discharge line. Advantageously, each of the at least two orifices are arranged in a pipe each having a valve for selectively allowing gas to pass through one of the at least two orifices. Preferably, the control apparatus includes selection apparatus for selecting a air to flow through one of the at least two orifices or a the other of the at least two orifices. The flow through one of the orifices induces a fast velocity at low pressure and flow through the other of the orifices induces slow velocity at high pressure. Advantageously, at least one of the at least two orifices exit directly into the discharge line. Preferably, both of the orifices exits directly into the discharge line. Advantageously, the each orifice exits directly into the discharge line and into an annular gap formed between the discharge line and a collar. Preferably, the vessel is provided with an inlet valve for selectively allowing material to be conveyed into the vessel. Advantageously, the apparatus further comprises a hopper arranged above the vessel for receiving material to be conveyed. Preferably, the apparatus further comprises a vibrating device for vibrating the hopper. Advantageously, the hopper is isolated from the vessel. Preferably, a rubber skirt, expansion or isolation joint is arranged between the bottom of the hopper and the vessel or the inlet valve to inhibit material from spilling over the vessel. Advantageously, the hopper has a gate valve to isolate material held therein from the vessel.

Preferably, the apparatus further comprises a load sensor for monitoring the weight of the vessel. The load sensors monitor the weight of the vessel, from which the quantity of material therein can be calculated. The gate valve isolates the weight of the cuttings on the inlet valve from the vessel.

Advantageously, a motor drives the metering screw. The motor may be of any suitable type including hydraulic, pneumatic or electric.

Preferably, the apparatus further comprises movement apparatus having a movement member within the vessel and movable adjacent an opening in the vessel to facilitate passage of the material to the metering screw. Advantageously, the movement member comprises a frame comprising a control shaft connected to a generally circular shaped outer perimeter portion and at least one cross-member. Preferably, the vessel has a substantially planar, flat bottom. Alternatively, the vessel has two sides which slope toward each other. Preferably, to form a chisel plane type vessel.

Preferably, the vessel has a conical hopper portion, wherein the conical hopper portion has a cone angle and forms a lower section of the vessel and the cone angle is below a critical value required to achieve mass flow of the drilling cuttings material.

Advantageously, the pressure sensor is arranged close to the exit of the metering screw. Preferably, the pressure sensor is arranged at the at least one gas inlet of in the pipe leading to the at least one gas inlet. The sensor is arranged between the end of the metering screw and before the outlet valve.

Also disclosed but not part of the present invention is a method for conveying drill cuttings from a vessel, the method comprising the steps of loading a vessel with drill cuttings, activating a metering screw to move drill cuttings from the vessel to a discharge line, and applying a gas to the drill cuttings to facilitate movement of the drill cuttings along the discharge line characterised in that pressure of the gas is measured in the discharge line in response to which the speed of rotation of the metering screw is adjusted. The gas is preferably air, although may be of any suitable type such as an inert gas like nitrogen. The pressure in the gas may be measured at any point along the discharge line, although is preferably close to the exit of the metering screw and preferably by the gas inlet in the discharge line.

Preferably, the speed of rotation of the metering screw is increased when the pressure is below a predetermined pressure level. Advantageously, the speed of rotation of the metering screw is decreased when the pressure is above a predetermined pressure level. Preferably, the predetermined pressure level is set at a first value when conveying wet drill cuttings and the predetermined pressure level is set at a second value when conveying dry drill cuttings. The first value may be 4 bar for conveying wet drill cuttings and the second value may be 1.5 bar for conveying dry drill cuttings.

Preferably, the moisture sensor measures the moisture content of the drill cuttings which moisture content value is relayed to a control apparatus which receives the moisture content value and sets the predetermined level according to whether the drill cuttings are dry or wet.

Advantageously, the gas applied to the drill cuttings to convey the drill cuttings through the discharge line is introduced through one of at least two orifices, one of the orifices smaller than the other, such that one provides gas at a high pressure and slow speed and the other at low pressure and high speed. The gas at high speed suitable for conveying dry drill cuttings and the gas at low speed suitable for conveying wet drill cuttings.

Also disclosed but not part of the present invention is a method for injecting a gas into a pipe to move drill cuttings material therealong, the apparatus comprising a pipe with at least one aperture therein and a supply of gas, wherein the aperture circums a substantial part of the circumference of the pipe, and a collar about the pipe defining an annulus through which the gas passes into the pipe through the aperture.

Preferably, the pipe is of circular cross-section.

Advantageously, the pipe is of square, triangular, oval, rectangular, oblong, pentagonal, hexagonal or any other shape.

Also disclosed but not part of the present invention is an apparatus for conveying drill cuttings, the apparatus comprising a pressure vessel for holding drill cuttings, an inlet valve for selectively allowing drill cuttings into the pressure vessel and a screw conveyor arranged in the pressure vessel to selectively transfer the drill cuttings from the pressure vessel to a discharge line, the pressure vessel provided with a gas inlet to allow gas under pressure to be held in the pressure vessel characterised in that a reducer is arranged between the screw conveyor and the conveying pipe.

The discharge line may be a rigid pipe or a flexible pipe or hose, preferably between 50mm and 200mm in diameter, more preferably 100mm to 150mm and most preferably approximately 125mm in diameter.

Preferably, the vessel is a pressure vessel. Advantageously, the pressure vessel has been tested to withstand a working pressure of at least 2 Bar, more preferably, at least 4 Bar and most preferably, at least 7 Bar. Preferably, the apparatus further comprises a vent valve to prevent the vessel from being over pressurized.

A discharge line (conveying conduit) is maintained substantially full thereby facilitating consistent feeding or dosing rates. The conveying conduit may, in certain aspects, be dosed with drill cuttings in such a way that the conveying conduit is full so that the drill cuttings move along the conveying conduit in one long slug. Alternatively, the drill cuttings may form a plurality of slugs along the conveying conduit separated by pockets of pneumatic fluid. This is controlled by the rate at which the drill cuttings are released or pushed into the conveying conduit, which is known as the "dosing rate". The dosing rate is dictated by, among other things, the consistency of the drill cuttings, the pneumatic pressure applied to the drill cuttings, and the diameter of the conveying conduit in order to achieve a predetermined conveying rate. In a preferred embodiment, a conveying rate of thirty metric tons of drill cuttings per hour are moved along from the storage vessel into the conveying conduit and on to a destination.

The drill cuttings stored in the storage vessel may be dry or may be wet. Wet cuttings contain water and/or oil. Wet drill cuttings may be free flowing, non-free flowing, or pasty. Drill cuttings are often wet after having been processed with shale shakers. The drill cuttings may be dried by a vortex dryer, as described herein to produce substantially dry drill cuttings which, in some aspects, may be free flowing solids which abide by the laws of Newtonian flow.

Advantageously, the movement apparatus further comprises power apparatus connected to the movement member for moving the movement member. Preferably, the second opening has a length and the movement member comprises an elongated member preferably, having a length substantially equal to or greater than the length of the second opening. Advantageously, the elongate member has an edge shaped for facilitating movement of the drill cuttings material to the second opening. Preferably, the elongate member has a leading edge, which is chamfered to facilitate movement of the elongate member under a pile of drill cuttings and an trailing edge designed to catch drill cuttings to move them towards the second opening, thus the trailing edge is preferably perpendicular to the direction of movement of the elongate member, may be stepped and/or may be concave advantageously a scooping edge for scooping the drill cuttings into the opening and most preferably is a sliding frame.

Preferably, the second opening has a width and the movement member is movable back and forth across the width. Advantageously, the movement member comprises a frame having a control shaft connected to at least one curved outer perimeter portion. Preferably, the movement member comprises a frame having an outer perimeter portion generally eye-shaped. Alternatively, a rack and pinion system may be employed or a rotating disk having an arm located on the perimeter thereof to translate rotational motion into forwards and backwards motion, in a similar way to a crank in a car engine. Such a sliding member may be used in a variety of tanks, including, but not limited to, a mass flow hopper, core flow hopper, flat bottom hopper, a chisel plane flow-type tank, or a conical tank.

Preferably, the movement apparatus comprises or also comprises an auger. The auger may form part of a screw conveyor and may be any form of screw, which moves drill cuttings. Preferably, the auger is arranged beneath the second opening. Preferably, the auger is arranged in a ditch. The ditch may have a cover for inhibiting ingress of drill cuttings into the ditch when the apparatus is not being used for a long period of time. The cover may be movable with the movement member. The cover may be perforate or imperforate. Preferably, the box is located at the discharge end of the auger. Advantageously, the apparatus further comprises a motor for rotating the auger. Advantageously, the apparatus further comprises fingers or which may be blade like located at the end of the auger for facilitating release of the drill cuttings from the auger and preferably facilitate breaking up clumps of drill cuttings. Preferably, the auger comprises at least one blade of constant pitch. Advantageously or alternatively, the auger comprises at least one blade having a variable pitch.

Advantageously, the apparatus as claimed in any preceding claim, further comprising a cover to selectively cover the second opening. Preferably, the cover pneumatically seals the second opening. Advantageously, the cover is made from a screen, and thus allows gas to pass therethrough. Preferably, the cover is connected to the movement apparatus and moves therewith.

Preferably, the apparatus further comprises a central stem and a plurality of fingers or bristles extending therefrom. Preferably, the stem is movable with a valve located in the first opening to selectively allow drill cuttings into the vessel.

Preferably, the vessel has a substantially planar internal base. The base of the vessel may be planar and/or substantially horizontal. By using a non-conical hopper or vessel in certain embodiments disclosed herein, bridging is inhibited and reduces as compared to bridging that can occur in certain conical vessels. In one aspect, the sliding member(s) is/are substantially flat for sliding over a planar base. In certain aspects the sliding member is rigid. Preferably the planar base is circular and is between 1.5 and 4 meters in diameter, and in one particular embodiment is 2.7 meters in diameter. The planar base or the lower portion of the vessel may be provided with a plurality of small aeration ports to allow compressed sir therethrough to aerate the drill cuttings to facilitate conveying the drill cuttings through the second opening or into a ditch if provided.

Advantageously, the vessel has at least one substantially vertical wall. Preferably, the vessel has a domed top. Advantageously, the vessel is generally cylindrical with a generally circular base, the second opening extending through the generally circular base.

Advantageously, the first opening has a valve therein for controlling ingress of drill cuttings. The valve may be of the type disclosed in GB-A-1,539,079 or US-A-3,586,383.

Preferably, the first opening has a non return valve for inhibiting drill cuttings from exiting through the first opening.

Advantageously, the vessel has two sides which slope toward each other. The vessel may be of wedge, plane flow, transition, chisel, plane-flow, pyramid, square or any other suitable type.

Preferably, the vessel has a conical hopper portion. Advantageously, the conical hopper portion has a cone angle and forms a lower section of the vessel and the cone angle is below a critical value required to achieve mass flow of the drill cuttings material.

Advantageously, the vessel has a capacity of between 0.15 cubic metres and 1 cubic meter, such that preferably, the apparatus is not used for storing drill cuttings, but is used in the continuous conveying of drill cuttings. The apparatus may be as small as 0.05 and 0.2 cubic metre.

Preferably, the vessel has a capacity of at least three cubic metres, such that preferably, this is used for storing drill cuttings, either on a rig, on a barge, boat, lorry, train or in a storage area on shore. Most preferably, the vessel is between ten and thirty cubic metres and even more preferably between twelve and sixteen cubic metres.

Advantageously, the apparatus further comprises a moisture-content sensor for sensing moisture content of drill cuttings. Preferably, the apparatus further comprises a hopper wherein the moisture-content sensor is located in the hopper. Advantageously, the moisture-content sensor is located within the vessel. Preferably, the apparatus further comprises a controller for gathering data from the moisture-content sensor and means to divert the drill cuttings in response to the data. Preferably, the means comprises a diverter valve for diverting the drill cuttings. Advantageously, the means comprises a screw conveyor, which preferably has a motor driving the screw conveyor which can rotate the motor selectably in a clockwise and counter clockwise direction in order to reverse the conveying from a first direction to a second opposite direction.

Preferably, the apparatus further comprises a storage vessel for storing dry drill cuttings. Advantageously, the apparatus further comprises a storage vessel for storing wet drill cuttings. Advantageously, the storage vessel for storing dry cuttings is the internal bulk storage vessel of a drilling rig. Preferably, the storage vessel for storing dry cuttings is the internal hold of a boat or barge. Preferably, the storage vessel for storing dry cuttings is a further apparatus of disclosed herein. Advantageously, the storage vessel for storing wet cuttings is a further apparatus of disclosed herein. Advantageously, the storage vessel disclosed herein is fed using a blow tank. Alternatively, a pump, for example a positive displacement pump or a cement pump (or pumps) are used in addition to or in place of blow tank(s) to move the drill cuttings, for example from shakers or a ditch or vortex dryer to the storage vessels. The floor area and overall space around shale shakers is often limited and so the storage vessels or skips for containing the drill cuttings are often placed relatively far, for example a tens or hundreds of metres (a few hundred feet), from the shale shakers.

Preferably, the apparatus is skid mounted.

Also disclosed but not part of the present invention is a method for conveying drill cuttings, the method comprising the steps of loading a conveying line with drill cuttings and applying a positive pressure to move the cuttings therealong, characterised in that the step of loading the conveying line is carried out by a mechanical movement apparatus. The drill cuttings may be free-flowing paste or a non free-flowing paste, dry clumps, dry free flowing particles, damp, a slurry or in any other form.

Preferably, the conveying line is provided with a compressed gas inlet, the method comprising the step of supply compressed gas through the compressed gas inlet to facilitate movement of the drill cuttings along the conveying line. Advantageously, the mechanical movement apparatus comprises an auger, the auger rotated to load the conveying line with drill cuttings. Preferably, the auger is located in a pressure vessel, the method further comprising the step of loading the pressure vessel with drill cuttings whereupon the auger is rotated to load the conveying line with drill cuttings from the pressure vessel. Advantageously, the step of pressurizing the pressure vessel to inhibit drill cuttings from passing from the auger or conveying line back into the pressure vessel.

Advantageously, the pressure vessel has an inlet opening and a valve located in the inlet, the method further comprising the step of activating the valve to selectively allow drill cuttings into the pressure vessel.

Preferably, the pressure vessel has an inlet opening and a non return valve located in the inlet, the method further comprising the step of allowing the drill cuttings into the pressure vessel, the gas under pressure and drill cuttings therein prevented from escaping through the non return valve.

Preferably, the method is accomplished on a boat, or on an offshore drilling rig.

Advantageously, all cuttings movement apparatus is in controlling communication with control apparatus, the method including controlling with the control apparatus the cuttings movement apparatus.

Also disclosed but not part of the present invention is a method for storing drill cuttings in a storage vessel and discharging the drill cuttings therefrom into a pressurized conveying line, the method comprising the steps of loading the drill cuttings into a storage vessel, the method further comprising the steps of activating mechanical movement apparatus to move the drill cuttings toward an opening in the substantially in the storage vessel to facilitate discharge of the drill cuttings. Preferably, the storage vessel is pressurized, most preferably, with a pneumatic gas.

Advantageously, the storage vessel has a substantially planar base, the opening located in the substantially planar base. Preferably, the mechanical movement apparatus comprises a wiper, the method further comprising the step of moving the wiper to move at least some of the drill cuttings toward the opening. Advantageously, the wiper forms part of a frame, the method comprising the step of moving the frame to move at least some of the drill cuttings toward the opening. Preferably, the wiper comprises finger or bristles to move at least some of the drill cuttings toward the opening. Advantageously, the mechanical movement apparatus further comprises a piston and cylinder, the method further comprising the step of activating the piston and cylinder to move the wiper. The piston and cylinder may be activated by a hydraulic or pneumatic supply.

Prior art methods use a cuttings dryer which, when coupled with a pneumatic cuttings conveying system reduces waste volumes and liquid content, leading to an overall reduction in storage volume required and transportation and disposal costs are also reduced. Due to dried cuttings tending more towards lead phase when using a positive pressure pneumatic conveying system, it is important in certain aspects that any change in dryer output is acted upon at the earliest opportunity. It is known to be problematic to convey a product when its consistency is not uniform. To have a storage tank with a mixture of dried cuttings and wet cuttings can require a conveying system to alternate between various modes of flow, between continuous and discontinuous phase flow. The flow regime of cuttings within a pipe does not lend itself to this change as wet cuttings tend towards dense phase with either a shearing type or plug type flow whereby the slugs of cuttings act as a pulsatile regular/irregular moving bed which may fill the entire cross section of pipe; and dried cuttings tend towards suspended flow. The transfer rate is required to be substantially reduced should this "mixture" of modes of flow transfer be required. Reduced transfer rates are not desirable while a vessel is alongside a rig taking on a load. In order to maximize transfer rates, it is beneficial to maintain a cuttings consistency within the storage vessel.

The cuttings discharge from a dryer with a screen may be significantly altered should the screen "blind," hence not allowing the liquid to pass through resulting in a wet discharge. This is known to happen on occasions when a change in drilled formation results in a change of particle size generated at the drill bit.

A wetness meter is used to continuously monitor dryer discharge. The wetness meter may be based on the Near Infrared (NIR) principle, where it is known that several molecular bonds absorb infrared light at well defined wavelengths. Common bonds are O-H in water, C-H in organics and oils and N-H in proteins. The light absorbance level at these specific wavelengths is proportional to the quantity of that constituent in the sample material. Infrared filters within the instrument sensor generate a sequence of light pulses, one of these pulses is selected to be at the specific absorbance wavelength for the constituent required to be measured while the other pulses are selected so as to determine the reflectance properties of the material. The light pulses illuminate the sample being measured with the reflected light being collected and focused onto a detector, the electrical signals from the detector are processed into a ratio to provide a value that is proportional to the constituent concentration - this being in percent or other engineering units, water content and oil based mud content can thereby be monitored. This technology is well defined and provides high accuracy and speed of response to facilitate on-line measurement and control of the dryer process.

Alternative methods in accordance with the present invention of obtaining a "wetness" value include passing the product through an open mesh and measuring the pressure drop generated. A rise in pressure drop indicates product adhering to the mesh most likely due to a rise in the "wetness" value. Dielectric constant based instrumentation or vibratory sensitive instrumentation may also be used to monitor change in consistency.

Use of information can minimize the "mixing" of cuttings with storage vessels. In one aspect a dedicated storage tank is used if a desired "wetness" value is exceeded. In one such system a bank of storage vessels are filled with drill cuttings of a satisfactory consistency and oily if the desired wetness value is exceeded, then the flow is diverted to a "wet" storage tank and an alarm raised such that the operator can then resolve the situation. In another system disclosed herein a screw conveyor being used to feed the conveying system after the dryer may be immediately reversed in order to feed a dedicated "wet" tank. In another system disclosed herein two dryers are used each fitted with a screen with a different mesh size. Should one dryer blind or malfunction resulting in a "wet" cuttings discharge, then the cuttings can be redirected by actuating an appropriate valve below the dryer feed conveyor in order to use the alternative dryer. In another system disclosed herein overall height required is reduced through the use of screw conveyors.

Also disclosed but not part of the present invention is a method for processing drill cuttings, the method comprising obtaining drill cuttings from at least one of a shale shaker, hydrocyclone, centrifuge or drill cuttings dryer, measuring the moisture content of the drill cuttings to obtain a moisture value, comparing the moisture value to a predetermined threshold and conveying the drill cuttings in a dry cuttings route if the moisture value is below the predetermined threshold or conveying the drill cuttings in a wet cuttings route if the moisture value is above the threshold.

Preferably, the dry cuttings route comprises a feeder apparatus and a pneumatic conveying line, the method further comprising the steps of loading the drill cuttings into the feeder apparatus, which feeder apparatus feeds the pneumatic conveying line with the drill cuttings. Advantageously, the pneumatic conveying line is a positive pressure pneumatic conveying line. The positive pneumatic pressure is applied to push the drill cuttings through the conveying line. Thus preferably, the pressure behind the drill cuttings is higher than the pressure in front of the drill cuttings in order to move the drill cuttings through the conveying line. The conveying line may be a rigid pipe or a flexible tube. Preferably, the pneumatic conveying line leads to a storage vessel, the method further comprising the step of conveying the drill cuttings through the pneumatic conveying line to the storage vessel. The storage vessel is preferably of the type disclosed and claimed herein. Advantageously, the pneumatic conveying line leads to a bulk storage tanks of an oil or gas rig, the method further comprising the step of conveying the drill cuttings through the pneumatic conveying line to the bulk storage tanks. Preferably, the pneumatic conveying line leads to a hold of an oil or gas rig, the method further comprising the step of conveying the drill cuttings through the pneumatic conveying line to the hold. The hold may be pressure tight and have its own positive pressure pneumatic conveying apparatus for removing the drill cuttings from the hold or the hold may not be pressure tight and may use a stand alone blow tank, apparatus as disclosed herein or vacuum apparatus, such as that manufactured and sold by The Fuller Company (now called FL Smidth) for sucking the drill cuttings from the hold and transferring them to other transportation means on the port, such as tanks or storage vessels on trains, barges or lorries. Preferably, the step of measuring the moisture content of the drill cuttings is carried out with a moisture sensor located in the feeder apparatus. Advantageously, the feeder apparatus comprises a hopper and a pressure vessel, the step of measuring the moisture content of the drill cuttings is carried out with a moisture sensor located in the hopper.

Preferably, the wet cuttings route comprises a feeder apparatus and a pneumatic conveying line, the method further comprising the steps of loading the drill cuttings into the feeder apparatus, which feeder apparatus feeds the pneumatic conveying line with the drill cuttings. Advantageously, the pneumatic conveying line is a positive pressure pneumatic conveying line. The positive pneumatic pressure is applied to push the drill cuttings through the conveying line. Thus preferably, the pressure behind the drill cuttings is higher than the pressure in front of the drill cuttings in order to move the drill cuttings through the conveying line. The conveying line may be a rigid pipe or a flexible tube. Preferably, the pneumatic conveying line leads to a storage vessel, the method further comprising the step of conveying the drill cuttings through the pneumatic conveying line to the storage vessel. The storage vessel is preferably of the type disclosed and claimed herein. Advantageously, the pneumatic conveying line leads to a cuttings dryer for further drying, such as a vortex dryer or a dryer of the type disclosed in GB-A-2,297,702. Preferably, the drier drill cuttings are then returned in the method to have the moisture measured. Advantageously, if a mesh is used in the cuttings dryer, a mesh size different from the ones used in the apparatus from which the cuttings were previously processed i.e. shale shaker, hydrocyclone, centrifuge or drill cuttings dryer in case the high moisture content of the drill cuttings was caused by near particle blinding. Preferably, the step of measuring the moisture content of the drill cuttings is carried out with a moisture sensor located in the feeder apparatus. Advantageously, the feeder apparatus comprises a hopper and a pressure vessel, the step of measuring the moisture content of the drill cuttings is carried out with a moisture sensor located in the hopper.

Advantageously, the drill cuttings from the at least one of a shale shaker, hydrocyclone, centrifuge or drill cuttings dryer, are feed into a feeder apparatus whereupon moisture content of the drill cuttings is measured to obtain a moisture value with a moisture sensor located therein, the feeder apparatus feeding the drill cuttings into a pneumatic conveying line, the conveying line having a diverter valve therein, the method further comprising the steps of diverting the drill cuttings using the diverter valve into a dry cuttings route if the moisture value is below the predetermined threshold or conveying the drill cuttings in a wet cuttings route if the moisture value is above the threshold.

Preferably, a screw conveyor is located beneath the at least one of a shale shaker, hydrocyclone, centrifuge or drill cuttings dryer to receive the drill cuttings, the screw conveyor comprising a drive such that the screw conveyor is reversible to convey the drill cuttings in one direction for a dry cuttings route and in a second direction for a wet cuttings route.

Advantageously, the predetermined threshold is 1%, 3% or 5% moisture content. Moisture content is comprised water content and oil content. The ratio of oil to water on drill cuttings varies greatly, but is often found in the region of half water and half oil.

Also disclosed but not part of the present invention is an apparatus for carrying out the above method. The apparatus preferably comprises a moisture sensor and means for directing the drill cuttings in a wet cuttings route or a dry cuttings route. Advantageously, the apparatus further comprises a controller for obtaining data from the moisture sensor and comparing the data to a predetermined value and activating the means according to the data.

Also disclosed but not part of the present invention is a method for moving drill cuttings, the method comprising the steps of loading a conduit with drill cuttings, applying positive pneumatic pressure to the drill cuttings to push the drill cuttings through the conduit characterised in that the positive pressure is applied through inlets at spaced apart intervals along the conduit for facilitating movement of drill cuttings therethrough.

Preferably, the pneumatic pressure in the conduit is measured at spaced intervals therealong, the pressure measurements reported to a controller, the controller controlling the application of pneumatic pressure through said inlets at spaced apart intervals along the conduit. Advantageously, the controller switches each inlet at spaced apart intervals on or off in response to the pressure measurements. Preferably, the pressure applied at each subsequent inlet is less than the pressure of the previous inlet. Advantageously, the tubes to the inlets at spaced apart intervals along the conduit, wherein the tubes comprise non-return valves to inhibit ingress of drill cuttings into the inlets.

Preferably, the pressure to each inlet at spaced apart intervals is variable, the pressure applied thereto varied in accordance with the pneumatic pressure in the conduit is measured at spaced intervals.

Advantageously, the pressure to each inlet at spaced apart intervals is fixed. For example, the pressure at the first inlet is 4 bar, 3.5 at the second inlet, 3 bar at the third inlet, 2.5 bar at the fourth inlet, 2 bar at the fifth inlet and 1.5 bar at the sixth inlet. Each inlet may be spaced at a fixed distance along the conduit, for example every 25m. The distance may decrease to for example every ten metres across a bend in the conduit. The inlet may be placed at the elbow of the conduit.

Also disclosed but not part of the present invention is a feeding apparatus for loading drill cuttings into a positive pressure conduit comprising a pressure vessel, an inlet, a valve for selectively allowing drill cuttings into the pressure vessel and an outlet leading into a conduit, the outlet comprising a bend therein beneath the pressure vessel characterised in that the bend has a compressed air inlet in the bend for supplying a positive pressure to push the drill cuttings therethrough. Preferably, the inlet is directed horizontally, advantageously in line with the conduit. Preferably, a further valve is located between the pressure vessel and the outlet. Advantageously, the outlet converges through the bend, for example a circular cross-section outlet converges from 150mm to 125mm diameter.

For a better understanding of the present invention, reference will now be made, by way of example, to the accompanying drawings, in which:
Figure 1 is a schematic representation showing a drilling rig provided with a system incorporating a dosing apparatus and storage vessels ;
Figure 2 is a side view partially in cross-section of a dosing apparatus of the system shown in Figure 1;
Figure 2A is a schematic view of an alternative part of a dosing apparatus or storage vessel disclosed herein;
Figure 3 is an end view of part of the dosing apparatus shown in Figure 2;
Figure 4 is a schematic side view of part of the dosing apparatus shown in Figure 2, with some hidden parts shown;
Figure 5 is a schematic view in cross-section of a storage vessel of the system shown in Figure 1, the storage vessel having drill cuttings stored therein;
Figure 6 is a view in cross-section taken along line 6-6 of Figure 5, with parts omitted for clarity;
Figure 7 is a view in cross-section of an alternative part for the dosing apparatus shown in Figure 2 or for the storage vessel shown in Figure 5;
Figure 7A illustrates the shape of a cross-sectional view of part of the part shown in Figure 7;
Figure 7B to 7D illustrate alternative shapes to the shape shown in Figure 7;
Figure 8 is a view in cross-section of an alternative part of the dosing apparatus shown in Figure 2 or storage vessel shown in Figure 5;
Figure 9 is a schematic view of part of a system dealing with drill cuttings;
Figure 10A is a schematic view of a dosing apparatus
Figure 10B is a schematic view of a dosing apparatus ; and
Figure 10C is a schematic view of a dosing apparatus

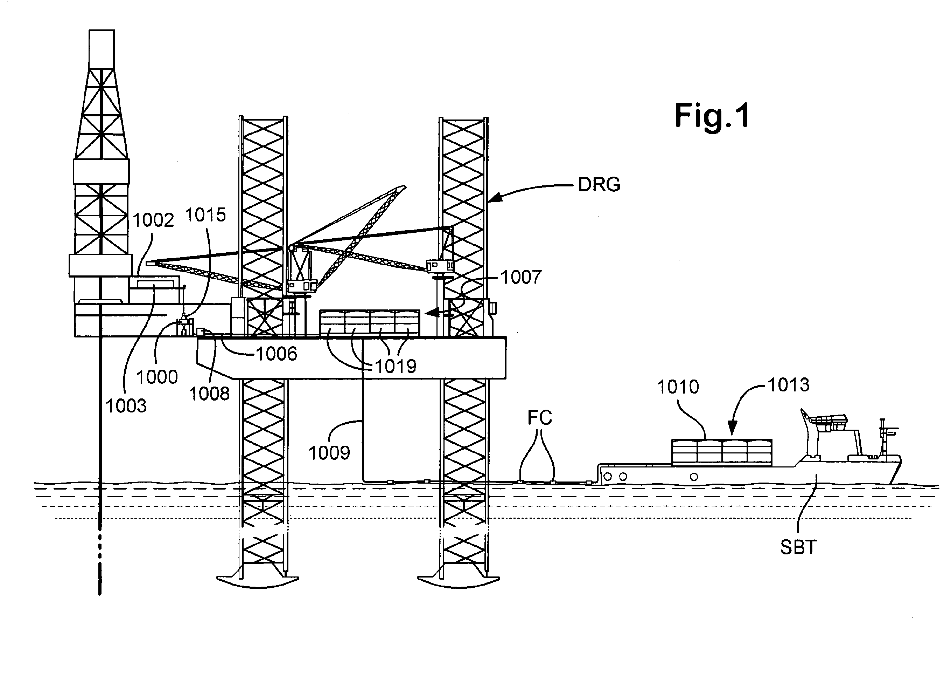

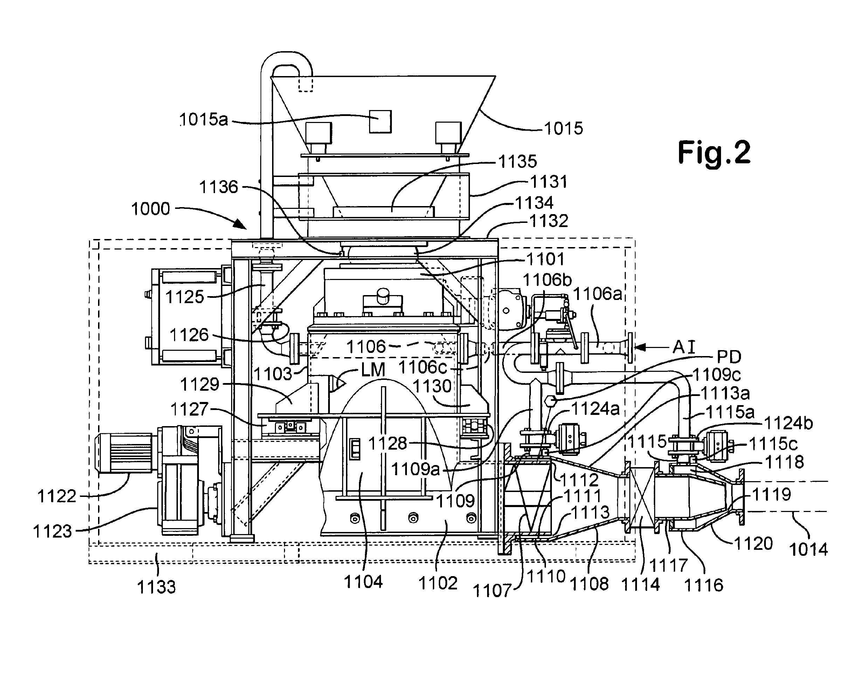

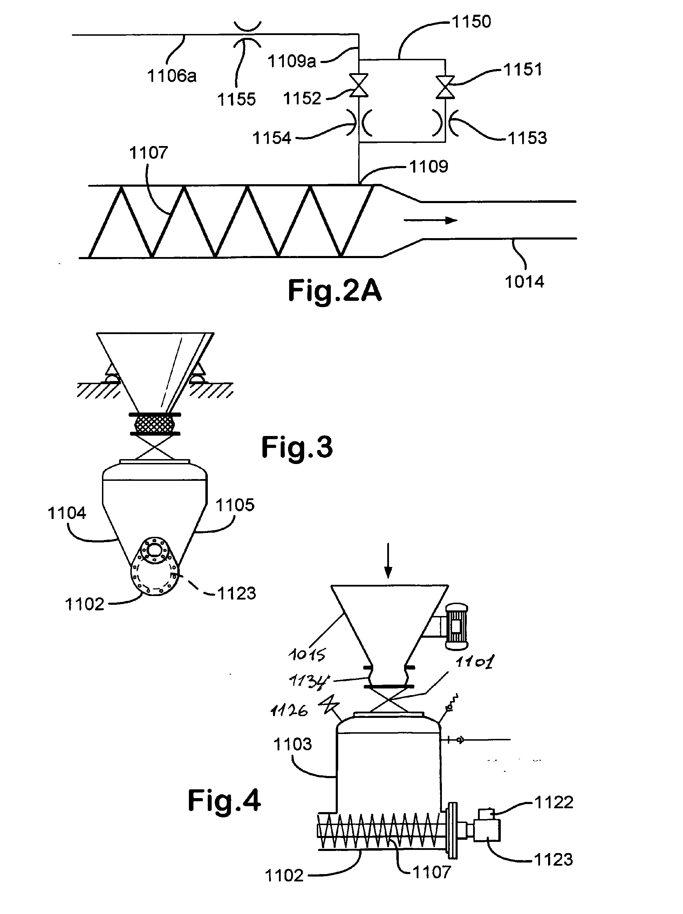

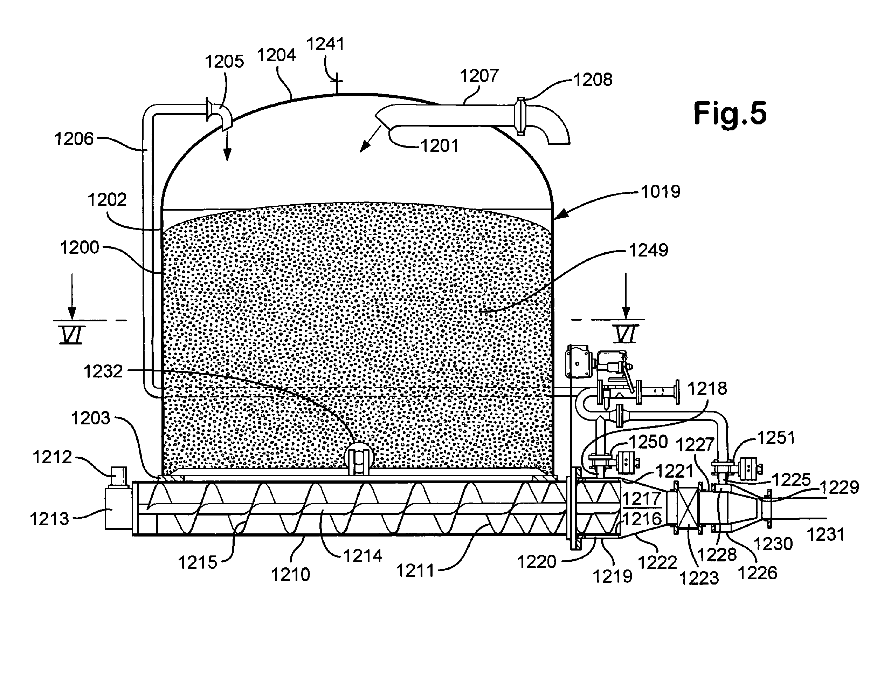

Referring to Figure 1, drill cuttings material in a slurry produced from drilling a well is feed to a bank of shale shakers 1002 situated on a drilling rig DRG. The shale shakers 1002 separate the fluid in the slurry from drill cuttings which fall into a ditch 1003. Optionally, the ditch 1003 has an auger or other conveyor (not shown) running therealong to move the material to a distal end of the ditch 1003. The wet drill cuttings material falls directly into a vibrating hopper 1015 of a dosing apparatus 1000. The dosing apparatus 1000 feeds a pneumatic conveying line 1006 through which the material is blown by compressed air provided by a compressed air supply 1008. The pneumatic conveying line 1006 leads to a bank 1007 of storage vessels 1019. In one aspect the dosing apparatus 1000 includes components as described with reference to Figure 2 and the storage vessel described with reference to Figure 5 below. Alternatively, the drill cuttings material is re-injected directly in to a well (CRI) from the dosing apparatus or from the bank 1007 of storage vessels 1019. The drill cuttings material is kept in the storage vessels 1019, which act as a buffer storage, until a supply boat SBT arrives and is ready to receive the drill cuttings material. A flexible pneumatic line 1009 is attached to the bank 1007 of storage vessels 1019 and to a bank 1010 of storage vessels 1013 on the supply boat SBT. Optionally, a screw or other conveyor associated with the storage vessels 1019 doses the flexible pneumatic line 1009 with drill cuttings material. Positive pneumatic pressure (supplied, for example by a rig pressure system or a dedicated pressure system) in the flexible pneumatic line 1009 blows the drill cuttings material into a further storage vessel 1010 of the bank of storage vessels 1013 on the supply boat SBT.

The supply boat SBT then transports the bank 1010 of storage vessels 1013 to another location, such as a harbour. The storage vessels 1013 may be lifted off the supply boat SBT and placed on train cars, flat bed trucks or lorries, or directly into a processing plant. Alternatively, further storage vessels (not shown) are located on shore and the drill cuttings are discharged from the bank 1013 of storage vessel on the supply boat SBT to the storage vessels located on shore, in any way as described above herein in relation to moving cuttings from an offshore rig to a supply boat. Any control system or apparatus described herein may be used with the vessels, apparatuses, and systems in accordance with the present invention.

Referring to Figures 2 to 4, in one aspect the dosing apparatus 1000 has a valve 1101, which may be a spherical dome valve with an inflatable seal supplied by Roto Disc Co. or of the type disclosed in GB A 1,539,079, arranged between the hopper 1015 and a chisel plane pressure vessel 1103 having for example, a capacity of approximately 0.33 cubic meters, although the capacity may typically be between 0.1 and 1 cubic meter. Vibrator apparatus 1015a selectively vibrates the hopper 1015, which *inter alia* inhibits bridging of the drill cuttings material about or across an opening at the lower end of the hopper 1015. The vessel 1103 is a chisel plane type vessel having two converging walls 1104 and 1105. An air inlet 1106 is arranged in an upper part of a wall of the vessel 1103 for selectively receiving air under pressure through a conduit 1106a from an air inlet AI. The air under pressure may be obtained from a compressor (not shown). A screw feeder or metering screw 1107 is arranged at the bottom of the converging sides 1104 and 1105 in a housing 1102 integral therewith, which leads into a reducer 1108. The reducer 1108 is provided with an air inlet 1109 in an outer wall 1110. Valve apparatus 1124a selectively controls air flow through the inlet 1109. The air inlet 1106 facilitates pressure equalization across the screw when pressure is generated within the transfer line by the conveying air through the valve 1124a.

The air inlet 1109 is in fluid communication with an annulus 1111 formed by a flanged pipe stub 1112 and the outer wall 1110. The flanged pipe stub 1112 has, in certain aspects, an inner diameter substantially equal to the inner diameter of the housing 1102 for the screw 1107, which, in one particular aspect, is about 30cm (twelve inches). The annulus 1111 has an annular opening 1113 formed by the end of the pipe stub 1112 and a converging wall 1113a of the reducer 1108. A valve 1114 at the converged end of the converging wall 1113a is an on/off isolation valve. The inner diameter of the converged end of the converging wall 1113a, in certain aspects, is 20cm (eight inches) in diameter.

A further air inlet 1115 is provided in an outer wall 1116 having a substantially concentric flanged pipe stub 1117 forming an annulus 1118 therebetween. Valve apparatus 1124b controls air flow in a conduit 1115a and through the inlet 1115. The flanged pipe stub 1117 has an inner diameter substantially equal to the inner diameter of the converged end of the converging wall 1113. The annulus 1118 has an annular opening 1119 formed by a converged end of the pipe stub 1117 and a converging part 1120 of outer wall 1116. The inner diameter of the end of the converged outer wall, in certain aspects, is 125cm (five inches), which is connected to a conveying line 1014 which has, in one particular aspect, an internal diameter of 125mm (5 inches) and may be a hose or rigid pipe. The conveying line 1014 may be in communication with storage apparatus and/or additional flow conduit(s).

In use, drill cuttings material from the ditch 1003 fall into the hopper 1015. Valve 1114 is closed and the inlet valve 1101 is opened. The drill cuttings material falls from the vibrating hopper 1015 into the vessel 1103. Inlet valve 1101 is then closed after a predetermined time or when the weight of the vessel 1103 has increased to a predetermined weight or when the height of the wet drill cuttings in the hopper 1015 has decreased by a predetermined amount, which, in one aspect is measured by a measuring device, for example an ultrasonic device, a radar device, or laser measuring device LM (shown schematically), which continually monitors the height of the wet drill cuttings in the hopper 1015.

The vessel 1103, in one aspect, now contains approximately 0.33 cubic meters of wet drill cuttings. Air enters the inlet 1106 and inlet 1109 from conduits 1106a, 1106b and 1128. A valve 1106c controls flow to the air inlet 1106. The screw 1107 is then rotated by activating a motor 1122 through a gear box 1123. Valve 1114 is opened and air inlet 1115 at an end of the conduit 1115a is closed. Drill cuttings material is then dosed by the screw 1107 into the reducer 1108 and blown through the valve 1114 and into the conveying line 1014 by positive pressure applied through inlet 1109. A pressure monitoring device 1109c monitors the pressure at the inlet 1109. A pressure monitoring device 1115c monitors pressure at the inlet 1115. A control system PD (shown schematically; in communication with the pressure sensors), in one aspect, maintains the pressure at the inlet 1109, in one aspect at between 3.5 to 4 bar by altering the speed of rotation of the screw 1107 for conveying drill cuttings material. If the pressure reading is too high, the speed of rotation of the screw 1107 will be decreased; if the pressure is too low, the speed of rotation of the screw 1107 will be increased. The drill cuttings material is conveyed along a conveying line (discharge pipework) 1014 in slugs by the screw 1107. In one aspect, slugs are between 0.5m and 10m long. In certain aspects, one lug equal to the entire content of the vessel 1103 is discharged, alternatively, the entire contents of the vessel 1103 is discharged in several discrete slugs or up to fifty slugs. The formation of slugs may simply be due to air under pressure forming pockets between the material to form slugs, which may happen randomly, such that fifty slugs may form or only five slugs may form. This may, at least in part, be dictated by the consistency of the drill cuttings, which may vary considerably from relatively dry metal cuttings through to wet earth, sticky clays and slurries. Once the vessel is empty, which is known by a monitoring the pressure at the sensor 1109a or waiting a predetermined time period, or by measuring a predetermined decrease in weight of the vessel 1103, valve 1114 is closed, the air supply through inlets 1106 and 1109 is stopped, and the air is diverted through the inlet 1115 to maintain pressure in the conveying line 1014 and/or to assist in moving any still-remaining material into and down the line 1014. Air pressure in the vessel 1103 is allowed to vent to atmospheric pressure through a line 1125 by activation of a valve 1126. The inlet valve 1101 is opened allowing more drill cuttings material to fall into the pressure vessel 1103 and the cycle is repeated.

The vessel 1103 is weighed using load cells 1127 and 1128 located under lugs 1129 and 1130, which support the entire weight of the vessel 1103. The vibrating hopper 1015 is supported by a frame 1131, which is supported by a further frame 1132 mounted on a skid 1133. An expansion or isolation joint (not shown) or a rubber skirt 1134 is arranged between the vibrating hopper 1015 and the inlet valve 1101, which isolates the vibrating hopper 1015 from the vessel 1103. A valve 1135 (for example a gate valve or slider valve) is located at the bottom of the hopper 1015 and above the rubber skirt 1134 to isolate the weight of cuttings in the hopper 1015 from the vessel 1103. The valve 1135 is closed after a predetermined time period, and a measurement is taken by the load cell 1127, which is indicative of how full or empty the vessel 1103 is. The valve 1135 is then opened. The inlet valve 1101 is fully open during a fill cycle and is closed whilst dosing the conveying line 1014. A further load cell 1136 is located between the hopper and the further frame 1132 so that the weight of cuttings in the hopper 1015 can be monitored to ensure that the hopper 1015 is not overfilled.

In one aspect, the conveying line 1014 leads to an inlet of the storage vessels 1019. The storage vessels are arranged on the offshore rig or if it is a land based rig, near the rig, for example within 300 meters although may be up to three or four kilometres away.

Figure 2A shows an alternative part for a part of the dosing vessel shown in Figure 2. It should be noted that the part shown in Figure 2A may be used solely in flow line 1109a or in any one or more or all flow lines 1109a, 106b, 1115 carrying compressed air to drill cuttings to be conveyed through conveying conduit 1014. It should also be noted that the part shown in Figure 2A may be used in any or all of the flow lines 1218, 1206, 1225 of the storage vessel shown in Figure 5. To accommodate both wet and dry cuttings and to provide adjustment for different cuttings, the position of selectively operable valves 1151 and 1152 determines whether air from the line 1109a flows through an orifice 1153 or through an orifice 1154. The open area of the orifice 1153 is greater than the open area of the orifice 1154. When the system is processing dry cuttings, i.e., when greater air velocity is needed to maintain material in suspension in an air flow, the valve 1152 is closed and air flows through the line 1150, through the open valve 1151, through the orifice 1153 and to the inlet 1109 so that an appropriate air flow to move dry material is achieved (for example at between, a pressure of 1 to 1.5 bar). When the system is processing wet cuttings, i.e. when lesser air velocity is needed to achieve solids accumulation and flow in the exit lines, the valve 1151 is closed and air flows through the line 1109a, through the open valve 1152, through the orifice 1154, and to the inlet 1109 so that an appropriate air flow for wet material is achieved (for example at a pressure of about 4 bar). The orifices 1153 and 1154 are shown to merge into one line before entering the annulus 1111 (see Figure 2). However, the orifices 1153 and 1154 may be arranged directly in the outer wall 1110 of the reducer 1108, such that air under pressure passes directly from the orifice 1153 and/or 1154 into the annulus 1111 and/or into the reducer 1108. The system as shown in Figure 2A may be used in the dosing apparatus shown in Figure 2 (and in other systems described below) and, as shown in Figure 2A, the line 1115a and its associated apparatus, valve, inlet, etc. is optional for systems in accordance with the present invention. In one particular aspect, to convey material through the system, the valves 1101, 1126, and 1124b are closed; the valves 1124a and 1106c are open (to equalize pressure across the screw 1107); and the screw 1107 is turned at a selected speed (for example appropriate for wet cuttings or dried cuttings) to move cuttings material to the reducer 1108. The control system PD which may be connected to each sensor, operable apparatus, motor, and item in the system (which may be a PID control system or a PLC system) is programmed to handle wet or dry cuttings and to control all valves, including the valves 1151, 1152 when present.

In one aspect, following the fill sequence a convey sequence is initialized whereby inlet valve 1101, vent valve 1126 and the flush air valve 1124b are closed, outlet valve 1114, conveying air valve 1124a and pressure equalization valve 1106 are opened. This facilitates air flow from the compressor through the discharge pipework 1014. The pressure attained by this air is a function of the pipe length, configuration, bore, internal surface finish and air flowrate. An orifice 1154 is sized such that the volummetric flow rate of air is such that a predetermined air velocity is achieved suitable for the transfer of drill cuttings. Typically this velocity would be around 20 meters per second for dried drill cutting i.e. powder/granular composition whereby the mode of transfer within the line 1014 is termed dilute phase. Dilute phase transfer is such that the material is transferred through the pipe at a velocity above that of the saltation velocity of the material. Air velocity at around 10 meters per second is utilized when transferring drill cuttings as taken direct from a shale shaker, from the shale shaker the drill cuttings will have a drill mud constituent thus resulting in a cohesive agglomerative substance for which the optimal transfer regime within the line 1014 is known to be dense phase. Dense phase describes the flow of material through the pipe as being set off in waves/slugs. Dilute phase transfer may be achieved at a lower pressure, in one aspect, around 1.5 Bar compared to dense phase which, in one aspect, utilizes 4 Bar. As such the appropriate pressure setting is generated by the air conveyor by introducing material into the line 1014 at the appropriate rate. The cuttings are carried/suspended in the airflow thus conveying in a uniformly dispersed phase during lean phase transfer. During dense phase the cuttings create a bed on the bottom of the pipe and as further material is added into the pipe a critical volume occurs whereby the cuttings spontaneously create a moving layer or wave slug or discrete slug of cuttings. On startup the compressed air flows through the conveying air valve 1124 and, in one aspect, a pressure drop across the transfer line 1014 of around 0.3 Bar is achieved, i.e. this is the pressure generated by the compressor to facilitate the appropriate flow rate of air through the pipe. The metering screw 1107 is then rotated in order to feed the cuttings into the transfer line 1014; the addition of cuttings into this transfer line then generates a back pressure which the control system can use as the basis for determining the rotational speed of the metering screw 1107. In one aspect the PLC based control system utilizes a standard PID (proportional integral and derivative) control loop based on a set point of either 1.5 Bar or 4 Bar depending on the cuttings being transported. As the pressure equalization valve 1106 is open, this facilitates any pressure generated at the transfer line 1014 to be equalized into the hopper 1103 which nullifies any adverse pressure gradient that may effect the performance of the metering screw 1107. An orifice is located within the pipe connection 1106 in order that the air flow into the hopper 1103 is minimized. This conveying cycle may be terminated manually, automatically via a timer, via a loss in weight system or alternatively based upon pressure feedback; i.e., it is understood that if the air pressure generated at line 1014 approaches that of the empty line pressure drop and the metering screw 1107 is rotating over a period, then it is known that the hopper 1103 is then empty and thus the transfer cycle should be stopped. In one aspect, the convey stop procedure includes: closing of the pressure equalization valve 1106c, the conveying air valve 1124a and outlet valve 1114; opening of the flush air valve 1124b to further purge the transfer line 1014 until the pressure drop achieved approaches that of an empty pipe for a nominal time period of around one minute. At the same time as the flush air valve 1124b is opened, the vent valve 1126 is opened in order to ensure that no pressure is contained within hopper 1103. Following this, the inlet valve 1101 is opened in order to accept into hopper 1103 a new charge of cuttings from hopper 1015. In this state, the vibratory motor 1105a is activated in order to assist the transfer of charge.

In certain particular aspects the valves 1124a and 1124b may be standard butterfly valves.

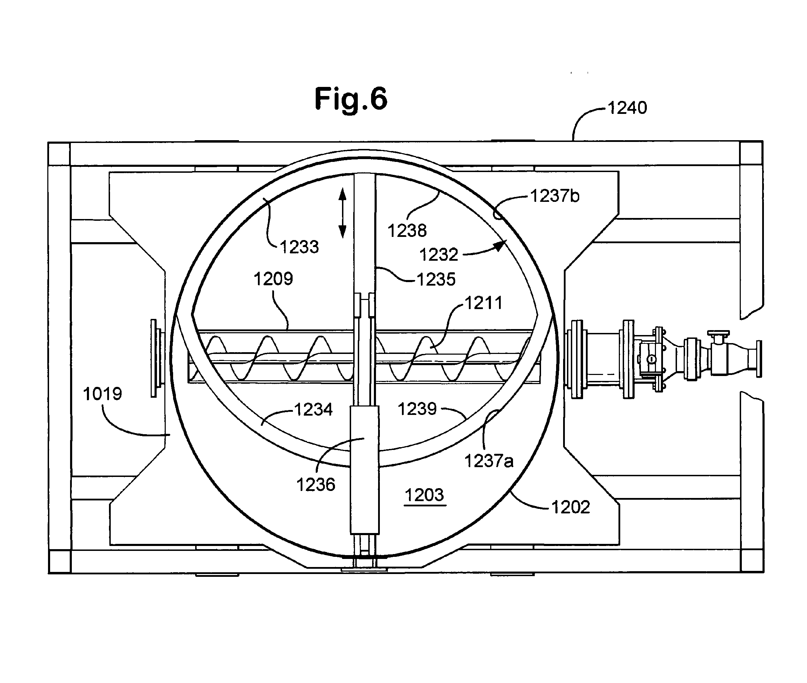

Referring to Figures 5 and 6, the storage vessels 1019 include a generally cylindrical vessel 1202 of circular cross section. The vessel, in one aspect, has an internal capacity of approximately 13.5 cubic meters. The vessel 1202 has a substantially circular planar base 1203 and a domed cap 1204. The planar base 1203 and the domed cap 1204 may be formed integrally or be welded to the wall of the vessel 1202. The vessel 1202 may be made of steel of the type defined by British Standard 1501 224 49B and is designed, in certain aspects, to withstand a working pressure of between 1 and 20 Bar, preferably 7 Bar. The domed cap 1204 has an air inlet 1205, having a 52mm (two inch) diameter air supply hose 1206 attached thereto. The domed cap 1204 is also provided with a cuttings inlet pipe 1207 provided with a valve 1208, such as a flap valve or butterfly valve which may be operable remotely using a stepper motor. The cuttings inlet 1201 has, in certain aspects, an internal diameter of 125mm (5 inches). The planar base 1203 has a generally rectangular opening 1209 arranged along the diameter of the planar base 1204. A tube 1210 has a rectangular opening corresponding to and fixed to the perimeter of the opening 1209 in the planar base 1204 to form a pressure tight seal. The tube 1210 may be welded or otherwise formed with the planar base 1203. The tube 1210 houses a screw conveyor 1211 driven by a variable speed hydraulic motor 1212 through a gear box 1213. The motor 1212 may alternatively be electric, petrol, pneumatic or otherwise powered motor.

The screw conveyor 1211 is, in certain aspects, a ribbon screw having no shaft or, as shown in Figure 5, is a shaft 1214 and a helical blade 1215. The helical blade 1215, in one aspect, has a diameter of between 150mm and 600mm (6 and 24 inches), and may have a diameter of about 300mm (twelve inches). The pitch of the screw may be constant or may reduce in pitch away from the discharge end. The shaft 1214 has a first end coupled to the variable speed hydraulic motor 1212 and a second end rotatably arranged in a bearing (not shown) in a discharge end of the tube 1210. The helical blade 1215 extends along substantially the entire diameter of the planar base 1203 and extends into a portion of a flanged pipe stub 1216. A discharge set up is very similar to the arrangement for the dosing apparatus 1000 in that it has a reducer 1217 provided with a air inlet 1218 in an outer wall 1219. The air inlet 1218 is in fluid communication with an annulus 1220 formed by the flanged pipe stub 1216 and the outer wall 1219. The flanged pipe stub 1216 has, in one aspect, an inner diameter substantially equal to the inner diameter of the tube 1210 for the screw 1211, which is about 30cm (twelve inches). The annulus 1220 has an opening 1221 formed by the end of the pipe stub 1216 and a converging wall 1222 of the reducer 1217. A valve 1223 is located at the converged end of the converging wall 1222. The inner diameter of the converged end of the converging wall 1222, in one aspect, is 20cm (eight inches) in diameter. An air inlet 1225 is provided in an outer wall 1226 having a substantially concentric flanged pipe stub 1227 forming an annulus 1228 therebetween. The flanged pipe stub 1227 has, in one aspect, an inner diameter substantially equal to the inner diameter of the converged end of the converging wall 1222. The annulus 1228 has an opening 1229 formed by a converged end of the pipe stub 1227 and a converging part 1230 of outer wall 1226. The inner diameter of the end of the converged outer wall, in one aspect, is 125cm (five inches) which is connected to a conveying line which has an internal diameter of 125mm (5 inches) and may be a hose or rigid pipe. The cuttings outlet 1231 has an internal diameter of 125mm (5 inches) and is attached to a cuttings conveying line (not shown) of the same internal diameter, which may be a flexible hose or a rigid pipe. A valve apparatus 1250 controls flow to the inlet 1218 and a valve apparatus 1251 controls flow to the inlet 1225. This system can operate as a system utilizing the apparatuses in Figure 2 and in Figure 2A and these valves can act as do the valves 1124a, b, Figure 2.

A sliding frame 1232 is arranged inside the vessel 1202 on the planar base 1203 about opening 1209. The sliding frame 1232 has two symmetrical curved members 1233 and 1234 forming an eye shape which is has a central member 1235 passing through the center of the planar base 1203 and arranged perpendicular to the opening 1209 and in line with a hydraulically actuated piston and cylinder 1236 is joined at one end to the wall or planar base 1203 of the vessel 1202 and the other to the center of the central member 1235 of the sliding frame 1232, to induce movement of the sliding frame 1232 over the planar base 1203 backwards and forwards as indicated by the arrow within the confines of the vessel 1202. The curvature of the two symmetrical curved members 1233 and 1234 is the same or slightly less than the curvature of the perimeter of the planar base 1203. The outer edges 1237a and 1237b of the two symmetrical curved sections 1233 and 1234 are chamfered, whereas the internal edges 1238 and 1239 facing the opening 1209 are at right angles to the plane of the planar base 1203. The curved members 1233 and 1234 have flat bottoms. The angle of the chamfer is, in certain aspects, between 45 and 20 degrees from the flat bottom.

The curved members 1233 and 1234 may have various profiles to accomplish the function of sliding underneath the drill cuttings when moving away from the opening 1209 and acting as a scoop to scoop the drill cuttings into the opening 209 for discharge.

The storage vessel 1019 is, optionally, attached to a skid 1240 to facilitate transport of the storage vessel on trucks, lorries, supply boats, train cars and on offshore and onshore rigs. The height of the storage vessel when mounted on the skid is, in one aspect, 3.26m, the length of the skid is 3.95m and the width of the skid is 2.9m.

A pressure relief valve 1241 is provided in the pressure vessel 1202, which is set to between 10% and 20% above the normal working pressure of up to 7 Bar. A hatch (not shown) is also provided in the wall of the pressure vessel 1202 to allow access for inspection, servicing and cleaning.

In use, the storage vessel 1019 is vented to atmosphere, either using a valve or by disconnecting the air supply line 1206 from the air inlet 1205. Doses of drill cuttings enter the storage vessel 1019 through the feed line 1014 from the apparatus 1000 and gradually fill the storage vessel 1019. The storage vessel 1019 can store up to preferably, twelve cubic meters of drill cuttings, but may be sized to store between five and 20 cubic meters. Vessel capacity is indicated via load cells to determine mass capacity or a level sensor is used to do this. Once the storage tank 1019 is full or near full, a valve (not shown) in the feed line is operated to divert the doses of drill cuttings to another storage vessel, like the vessel 1010. Alternatively, the feed line is disconnected from cuttings inlet 1201 and connected to the cuttings inlet on a further storage vessel 1019.

At a convenient time when the supply boat or vehicle to transport the drill cuttings is in close proximity to the bank 1010 of storage vessels 1019, for example when the supply boat is moored to or within three or four hundred meters of the offshore rig, one end of a flexible hose 1009 is connected to one of the storage vessels 1019. The other end of the flexible hose is connected to at least one storage vessel 1013 in a bank 1010 of storage vessels 1013 on the supply ship. The storage vessels 1013 are, in one aspect, of the type described with reference to Figures 28 and 29 herein. Floatation collars FC may be provided on the flexible hose to inhibit the hose from sinking into the sea. Air enters the inlet 1205 in the pressure vessel 1202 and through inlet 1218 to equalize the pressure across the screw 1211. Valve 1223 is opened and air inlet 1225 is closed. The screw 1211 is then rotated by activating motor 1212 through gear box 213. The drill cuttings 1249 are dosed by the screw 1211 into reducer 1217 and blown through the valve 1223 and into conveying line 1009. A pressure monitoring device 1250 monitors the pressure at the inlet 1218. In one aspect, a PID control system maintains the pressure at the inlet 1218 at between 3.5 to 4 bar (dense phase) or to 1/5 bar (lean phase) by altering the speed of rotation of the screw 1211 for conveying the drill cuttings material. If the pressure reading is too high, the speed of rotation of the screw 1211 will be decreased; if the pressure is too low, the speed of rotation of the screw 1211 will be increased. The drill cuttings are conveyed along the conveying line 1009 in slugs. In certain aspects, the slugs will be between 0.5m and 10m long. The hydraulic piston and cylinder 1236 is activated to move the sliding frame 1232 backwards and forwards to facilitate movement of the drill cuttings into opening 1209. The chamfered edges on the sides of the members 1236, 1237 of the sliding frame 1232 ensure that upon movement away from the opening 1209 the components of the sliding frame slide under the drill cuttings and upon movement towards the opening 1209, the opposed right angle or scoop profile surfaces pull the drill cuttings towards the opening 1209. The drill cuttings move through opening 1209 into the screw conveyor. Thus the first drill cuttings to enter the pressure vessel 1202, are the first drill cuttings to be removed from the pressure vessel 1202. Once the storage vessel 1200 is empty valve 1223 is closed, the pressurized air supply through inlets 1205 and 1218 is stopped and the pressurized air is diverted through inlet 1225 to maintain pressure in the conveying line 1009. Air pressure in the pressure vessel 1202 is allowed to vent to atmospheric pressure through vent 1241 or by a diverter valve (not shown).

In one aspect, the pressurized air supply on a rig is set at 7 bar.

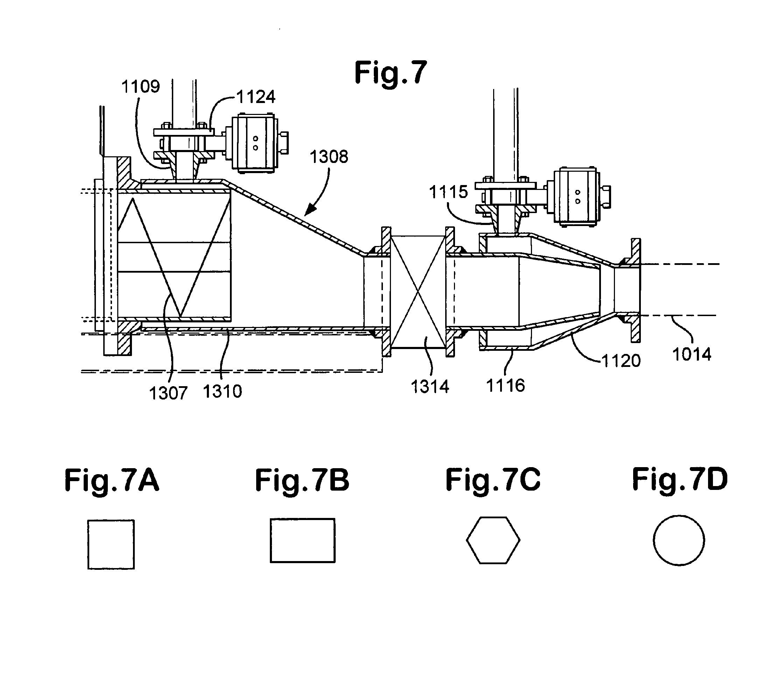

Figure 7 shows an alternative form of reducer 1308 to the reducers described above. Reducer 1308 has a lower wall collinear with the lower part of the outer wall 1310 and a portion which slopes from the top of the outer wall 1310 to the top of the valve 1314, such that the center of the valve 1314 is off center from the axis of the screw 1307. The opening to the screw 1307 may be circular (see Figure 7D), oval, square (see Figure 7A), rectangular (see Figure 7B) or any polygon shape (for example see Figure 7C) and the reducer may reduce to a smaller opening which may also be circular, oval, square or any polygon shape the diameter of the valve 1314. The floor of the reducer 1308 is substantially horizontal, which facilitates the conveying of liquid along the conveying line. Like numerals in Figures 5 and 6 indicate like parts as in Figure 2. Preferably, the reducer 1308 is provided with an inlet having two differently sized orifices: one small orifice for high pressure, low speed transfer of wet, conglomerated drill cuttings; and a large diameter orifice for low pressure, high speed transfer of dry drill cuttings, such as the arrangement shown in Figure 2A.

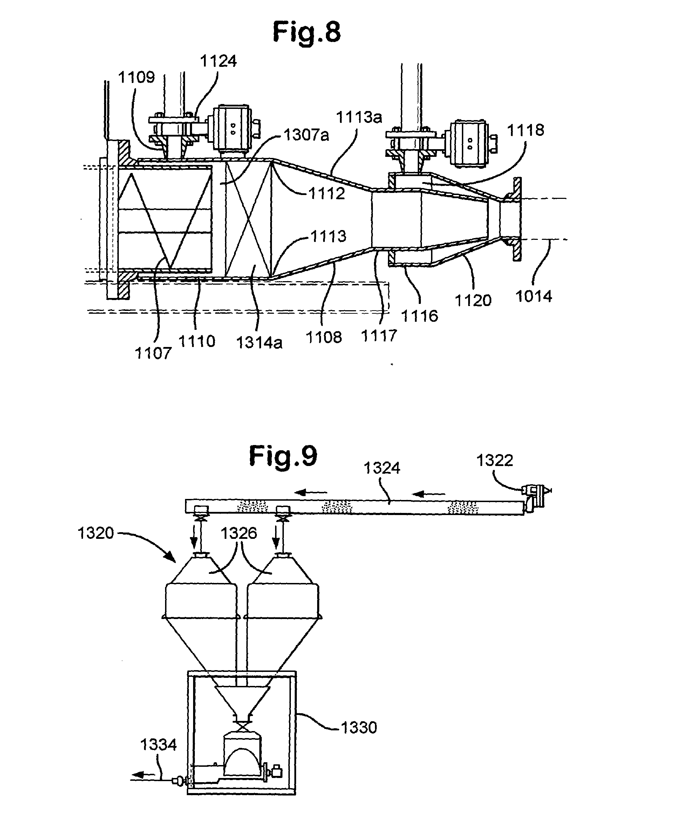

Figure 8 shows an alternative position for a valve 1314a (like the valve 1314, Figure 7). The valve 1314a is located at the exit of the screw, which may be substantially the same diameter as the screw 1107 and the reducer 1108 may be located external the valve 1314a. Optionally, there is a gap 1307a between the conveyor and the valve 1314a.

When a system for example as shown in Figures 1 and 9, deals with relatively dry cuttings, the pressure in the dosing apparatus (for example in the dosing apparatus 1000, Figure 3 or apparatus 1330, Figure 9) and in storage vessels (for example a storage vessel 1019, Figure 5) can be maintained at a level less than that used in storage vessels of systems that process relatively wet drilling cuttings material; for example, in certain aspects a pressure of 3.5 to 4 bars is used with the relatively wet material whereas a pressure of 1.2 to 2 bars is used for the relatively dry material. Also, with the relatively dry material, the speed of air and material in conveying lines and conduits can be greater than the speed of air and relatively wet material. In certain aspects, therefore, air inlet orifices can be larger when processing relatively dry material.

Figure 9 shows a system 1320 for conveying drill cuttings from shale shakers 1322 (shown schematically) which flow in a conveyor 1324 (any ditch herein may have a conveyor) to cuttings dryer apparatus, for example one, two, three or more dryers. Any suitable dryer apparatus or system may be used. As shown in Figure 9 two vortex dryers 1326 (any as described or referred to herein and, in one aspect, as described in Great Britain Patent No. 2, 297,702 A) receive the drilling cuttings material and the material flows from the dryers 1326 to a dosing apparatus 1330 (like any described herein, for example as in Figures 2, 2A, and/or 4). Material exits the apparatus 1330 in a conduit 1334.

The dryers 1326 remove moisture from the material and, in certain aspects, remove a substantial amount of moisture. In certain aspects, the total moisture content by weight of the material is reduced to about 3% and, in certain particular aspects, it is reduced to between 1% and 3% by weight. Such relatively dry material is relatively free flowing, is not a paste, is not a free flowing paste, and is not a non-free flowing paste. Thus, in certain aspects, for example speeds of for example 30 m/sec dry are achieved with the relatively dry material while speeds of for example 10 - 12 m/sec wet are achieved with the relatively wet material.

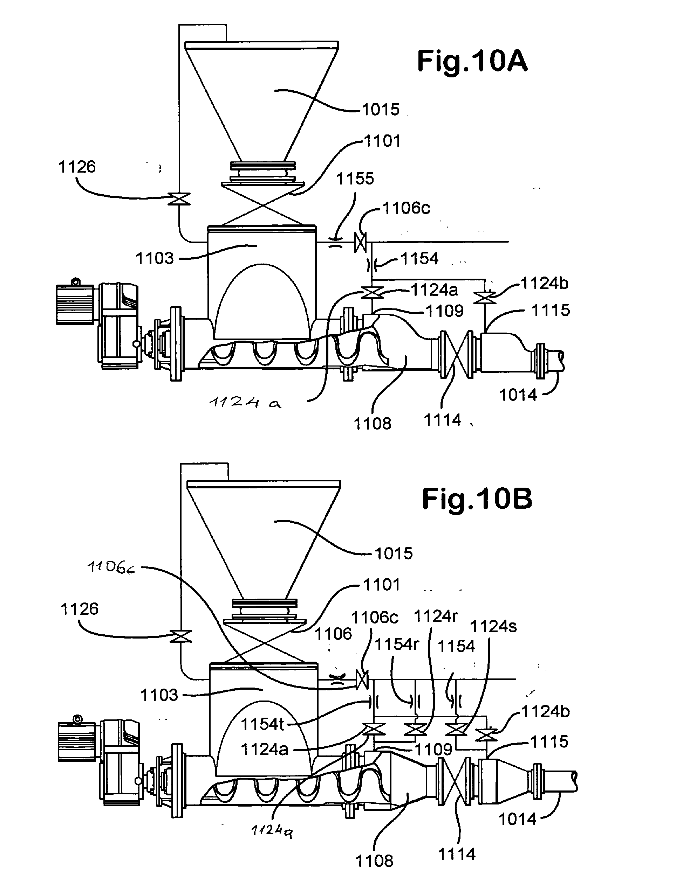

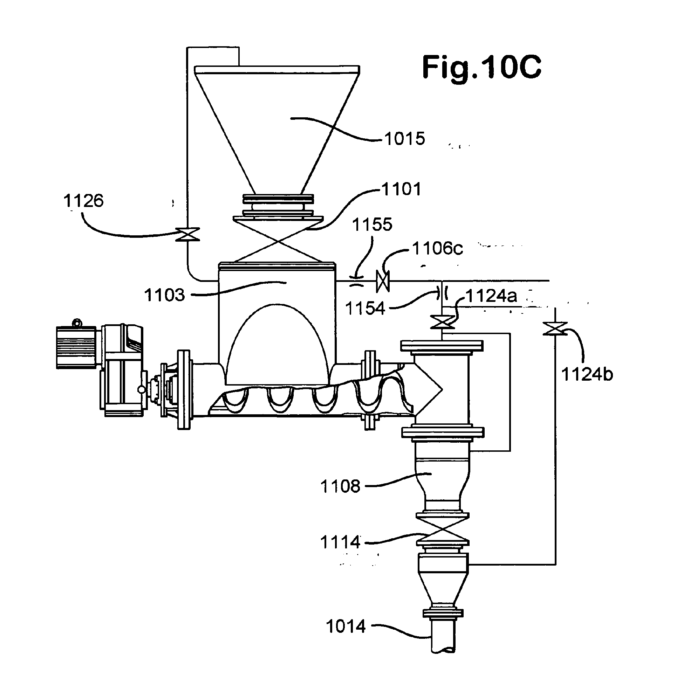

Figures 10A - 10C show alternative flow paths and circuits of a system as in Figures 2 and 2A and like numerals indicate like parts.

The system as shown in Figure 10B has a valve 1124r (like the valve 1124b) downstream of an orifice 1154r (like the orifice 1154). A valve 1124s is downstream of the orifice 1154. The conveying air valve 1124a is downstream of an orifice 1154t. As shown in Figure 10B, and as is true for the other embodiments with an upstream connection 1109 and a downstream connection 1115, air is supplied to the upstream connection 1109 when the hopper 1103 is being emptied in a material conveyance mode and the pressure equalization valve 1106c is open so that the pressure across the metering screw is equalized (and the valve 1106c is closed when filling the hopper 1103 since the hopper 1103 is then open to atmosphere via the valve 1101). Air is supplied to the downstream connection 1115 while the hopper 1103 is being filled so that conveyance can continue (or to blow through the discharge pipe for cleaning). By choosing which valves (1124a, 1124b, 1124r, 1124s) to open or close a particular line with a particular orifice is chosen for particular material (wet or dry).

## Claims

1. A method of conveying drill cuttings using a gas to convey the drill cuttings along a pipe (1014), the method comprising the steps of assessing if the drill cuttings to be conveyed are dry or wet **characterised in that** the method further comprises the step of activating a valve (1151, 1152) to divert the gas through an appropriate size orifice (1153, 1154) to provide the gas at an appropriate pressure and velocity.

2. A method as claimed in Claim 1, wherein the step of assessing if the drill cuttings to be conveyed are wet or dry is carried out by a sensor.

3. A method as claimed in Claim 2, wherein the sensor measures the moisture content.

4. A method in accordance with Claim 3, wherein the moisture reading is compared with a defined moisture content loaded into a controller.

5. A method as claimed in Claim 4, wherein the controller activates the valve (1151, 1152) in response to the reading obtained by the sensor.

6. A method as claimed in Claim 5, wherein the drill cuttings are loaded into a hopper (1015) above a vessel (1103) for loading the pipe (1014), wherein the sensor is arranged to measure the moisture content of the drill cuttings in the hopper (1015).

## Patentansprüche

1. Verfahren zum Transportieren von Bohrabfällen unter Verwendung eines Gases, um die Bohrabfälle längs eines Rohrs (1014) zu befördern, wobei das Verfahren die Schritte des Einschätzens, ob die zu befördernden Bohrabfälle trocken oder nass sind, umfasst, **dadurch gekennzeichnet, dass** das Verfahren ferner den Schritt des Aktivierens eines Ventils (1151, 1152) umfasst, um das Gas durch eine Drosselblende (1159, 1154) mit geeigneter Größe umzuleiten, um für das Gas einen geeigneten Druck und eine geeignete Geschwindigkeit einzustellen.

2. Verfahren nach Anspruch 1, wobei der Schritt des Einschätzens, ob die zu befördernden Bohrabfälle nass oder trocken sind, durch einen Sensor ausgeführt wird.

3. Verfahren nach Anspruch 2, wobei der Sensor den Feuchtigkeitsgehalt misst.

4. Verfahren nach Anspruch 3, wobei die Feuchtigkeitsablesung mit einem definierten Feuchtigkeitsgehalt, der in eine Steuereinheit geladen ist, verglichen wird.

5. Verfahren nach Anspruch 4, wobei die Steuereinheit das Ventil (1151, 1152) in Reaktion auf die durch den Sensor erhaltene Ablesung aktiviert.

6. Verfahren nach Anspruch 5, wobei die Bohrabfälle in einen Trichter (1015) über einem Gefäß (1103) zum Beschicken des Rohrs (1014) geladen werden, wobei der Sensor dazu ausgelegt ist, den Feuchtigkeitsgehalt der Bohrabfälle in dem Trichter (1015) zu messen.

## Revendications

1. Procédé permettant le transport des déblais de forage utilisant un gaz afin de transporter les déblais de forage le long d'un conduit (1014), le procédé comportant les étapes comprenant le fait de contrôler si les déblais de forage à transporter sont secs ou s'ils sont humides, **caractérisé en ce que** le procédé comporte, de plus, l'étape d'activation d'une vanne (1151, 1152) pour dévier le gaz à travers un orifice de dimension appropriée (1153, 1154) afin de fournir le gaz à une pression et à une vitesse appropriées.

2. Procédé selon la revendication 1, dans lequel l'étape comprenant le fait de contrôler si les déblais de forage à transporter sont humides ou secs est réalisée par un capteur.

3. Procédé selon la revendication 2, dans lequel le capteur mesure la teneur en humidité.

4. Procédé selon la revendication 3, dans lequel la valeur lue de l'humidité est comparée à une teneur en humidité définie chargée dans un contrôleur.

5. Procédé selon la revendication 4, dans lequel le contrôleur active la vanne (1151, 1152) en réponse à la valeur lue obtenue par le capteur.

6. Procédé selon la revendication 5, dans lequel les déblais de forage sont chargés dans une trémie (1015) située au-dessus d'une enceinte (1103) pour charger le conduit (1014), dans lequel le capteur est agencé pour mesurer la teneur en humidité des déblais de forage dans la trémie (1015).
